(19) **Europäisches Patentamt**
**European Patent Office**
**Office européen des brevets**

(11) **EP 4 746 076 A1**

(12) **EUROPEAN PATENT APPLICATION**
published in accordance with Art. 153(4) EPC

(43) Date of publication:
**20.05.2026 Bulletin 2026/21**

(21) Application number: **24839627.7**

(22) Date of filing: **04.07.2024**

(51) International Patent Classification (IPC):
**H01M 4/62** (2006.01)     **C01B 32/168** (2017.01)
**H01G 11/36** (2013.01)     **H01M 4/13** (2010.01)
**H01M 4/139** (2010.01)

(52) Cooperative Patent Classification (CPC):
Y02E 60/10

(86) International application number:
**PCT/JP2024/024157**

(87) International publication number:
**WO 2025/013735 (16.01.2025 Gazette 2025/03)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **12.07.2023 JP 2023114709**

(71) Applicant: **Sanyo Color Works, Ltd.**
**Himeji-shi,**
**Hyogo 670-0966 (JP)**

(72) Inventors:
• **UEMURA, Yu**
**Himeji-shi, Hyogo 670-0966 (JP)**
• **TANAKA, Yuki**
**Himeji-shi, Hyogo 670-0966 (JP)**

(74) Representative: **Mathys & Squire**
**Theatinerstraße 8**
**80333 München (DE)**

(54) **CARBON NANOTUBE-CONTAINING POWDER FOR ELECTRODE OF POWER STORAGE DEVICE, ELECTRODE MIXTURE PASTE, ELECTRODE FOR POWER STORAGE DEVICE, AND POWER STORAGE DEVICE**

(57)     To provide a carbon nanotube (CNT)-containing powder for an electrode of a power storage device, which can exhibit excellent dispersibility in an electrode mixture of a power storage device, and a method for producing the same, and to provide a composite for an electrode of a power storage device and an electrode mixture paste for a power storage device, which can obtain an electrode for a power storage device having low volume resistivity by using the CNT-containing powder for an electrode, and an electrode for a power storage device and a power storage device using the electrode mixture paste. A CNT-containing powder for an electrode of a power storage device, including a carbon nanotube (CNT) and ethyl cellulose as a dispersant. The dispersant may be attached to the surface of the CNT. The CNT-containing powder for an electrode of a power storage device can be produced by kneading a CNT, a dispersant, and a solvent to prepare a paste-like kneaded product, and then drying the kneaded product to obtain a CNT-containing powder.

EP 4 746 076 A1

**Description**

TECHNICAL FIELD

The present invention relates to a carbon nanotube (CNT)-containing powder for an electrode of a power storage device, a method for producing the same, an electrode mixture paste containing the CNT-containing powder for an electrode, and an electrode for a power storage device and a power storage device including an electrode mixture layer produced using the electrode mixture paste.

BACKGROUND ART

Conventionally, a carbon nanotube (hereinafter, may be referred to as a "CNT".) and the like are known as a substance excellent in various properties such as electrical conductivity, thermal conductivity, and mechanical properties. In recent years, three main materials of an electrode active material, a binder, and an electrically conductive aid have been used for a positive electrode of a lithium ion secondary battery. Among these materials, carbon black (acetylene black) has been used as an electrically conductive aid for solving a problem that an active material occupying 90% or more of the positive electrode mixture has poor electrical conductivity. In recent years, a CNT having electrical conductivity superior to that of carbon black has attracted attention.

In order for a CNT to effectively act as an electrically conductive aid, a CNT needs to be sufficiently dispersed in an electrode active material. However, since a CNT is likely to aggregate and have a property of being hardly dispersed, an attempt has been made to prepare a CNT dispersion containing a CNT and a dispersant in advance and mix the CNT dispersion with an electrode active material or the like in order to improve the dispersibility of the CNT. For example, Patent Literature 1 discloses a carbon nanotube dispersion containing a carbon nanotube-containing composition, a cellulose derivative having a constituent unit represented by general formula (1), and an organic solvent, in which the organic solvent contains one or more selected from aprotic polar solvents or terpenes, the concentration of the carbon nanotube-containing composition contained in the carbon nanotube dispersion is 1 mass% or less, and when 90 vol% of the dispersion is recovered as a supernatant after centrifugation at 10,000 G for 10 minutes, the concentration of the carbon nanotube dispersion in a supernatant portion is 80% or more of the concentration of the carbon nanotube dispersion before the centrifugation treatment.

In addition, Patent Literature 2 discloses a fine carbon fiber aggregate for redispersion obtained by adding a carbon fiber and a dispersant that is solid at least at room temperature ($20 \pm 10°C$) to an aqueous dispersion medium and removing the dispersion medium from a dispersion system in which the carbon fiber is isolated and dispersed in the dispersion medium, in which the carbon fiber is aggregated and solidified in a state of maintaining independent dispersibility, the content of the fine carbon fiber is 0.01 to 99.5 mass%, the content of the dispersant is 0.1 to 99.5 mass%, the moisture content is less than 10 mass%, and the dispersant is any one selected from (1) a surfactant capable of forming spherical, rod-like or plate-like micelles having a diameter of 5 to 2000 nm in an aqueous solution, (2) a water-soluble polymer having a weight average molecular weight of 10,000 to 50 million, and (3) a combination of cyclodextrin and fullerene.

CITATION LIST

PATENT LITERATURE

Patent Literature 1: WO 2017/188175 A
Patent Literature 2: JP-A-2008-274502

SUMMARY OF INVENTION

PROBLEMS TO BE SOLVED BY INVENTION

However, when the present inventors prepared an electrode mixture paste for a power storage device from the carbon nanotube dispersion described in Patent Literature 1 and observed the state of the surface of the electrode active material with an electron microscope, there was a portion where CNTs were aggregated and the dispersion was insufficient, and when an electrode for a power storage device was prepared and its electrical conductivity was examined, the volume resistivity was not sufficiently low, and there was room for improvement.

In addition, when the electrical conductivity of an electrode for a power storage device obtained by preparing the fine carbon fiber aggregate for redispersion described in Patent Literature 2 and then preparing an electrode mixture paste for a power storage device was examined, the volume resistivity was not also sufficiently low, and there was room for improvement.

Therefore, an object of the present invention is to provide a carbon nanotube (CNT)-containing powder for an electrode of a power storage device, which can exhibit excellent dispersibility in an electrode mixture of a power storage device, and a method for producing the same.

Another object of the present invention is to provide a composite for an electrode of a power storage device and an electrode mixture paste for a power storage device capable of obtaining an electrode for a power storage device having low volume resistivity by using the CNT-containing powder for an electrode, and an electrode for a power storage device and a power storage device using the electrode mixture paste.

SOLUTION TO PROBLEMS

The present invention relates to a CNT-containing powder for an electrode of a power storage device, containing:

a carbon nanotube (CNT), and
ethyl cellulose as a dispersant.

In an embodiment of the present invention, the dispersant may be attached to the surface of the CNT.

In an embodiment of the present invention, the weight ratio of the content of the CNT to the content of the dispersant (CNT : dispersant) may be 33 : 67 to 99 : 1.

Another embodiment of the present invention relates to a composite for an electrode of a power storage device containing the CNT-containing powder for an electrode and an inorganic compound, in which the inorganic compound is an electrode active material and/or a solid electrolyte.

Another embodiment of the present invention relates to an electrode mixture paste for a power storage device including the CNT-containing powder for an electrode of a power storage device, an electrode active material, a binder, and a solvent.

Another embodiment of the present invention relates to an electrode for a power storage device including an electrode mixture layer formed using the electrode mixture paste for a power storage device.

Another embodiment of the present invention relates to a power storage device including an electrode mixture layer formed using the electrode mixture paste for a power storage device.

Another embodiment of the present invention relates to a method for producing a CNT-containing powder for an electrode of a power storage device, the method including:

a CNT, a dispersant, and a solvent are kneaded to prepare a paste-like kneaded product, and then the kneaded product is dried to obtain a CNT-containing powder.

In the other embodiments, the solvent may be one or more selected from the group consisting of an alcohol-based solvent, an amine-based solvent, an ether-based solvent, a glycol ester-based solvent, and a ketone-based solvent.

EFFECTS OF INVENTION

Since the CNT-containing powder for an electrode of a power storage device of the present invention has excellent dispersibility and can obtain excellent electrical conductivity in an electrode for a power storage device, an electrode for a power storage device obtained using a composite for an electrode or an electrode mixture paste containing the CNT-containing powder for an electrode has low volume resistivity, and is excellent in electrical conductivity. Therefore, the power storage device obtained using the CNT-containing powder for an electrode of a power storage device of the present invention can remarkably improve the discharge capacity.

BRIEF DESCRIPTION OF DRAWINGS

Fig. 1(a) shows an electron microscope image ($\times$ 5,000 times) of an electrode surface prepared using an electrode mixture paste 1 obtained in Example 14, and Fig. 1(b) shows an electron microscope image ($\times$ 50,000 times) obtained by enlarging Fig. 1(a).

Fig. 2(a) shows an electron microscope image ($\times$ 5,000 times) of an electrode surface prepared using an electrode mixture paste 19 obtained in Comparative Example 12, and Fig. 2(b) shows an electron microscope image ($\times$ 50,000 times) obtained by enlarging Fig. 2(a).

DESCRIPTION OF EMBODIMENTS

Hereinafter, embodiments of the present invention will be described.

<CNT-containing powder for electrode of power storage device>

A CNT-containing powder for an electrode of a power storage device according to an embodiment of the present invention (hereinafter, also referred to as a CNT powder or CNT powder for an electrode of the present invention) includes a carbon nanotube (CNT) and ethyl cellulose as a dispersant.

Examples of the CNT used in the present invention include a single-walled carbon nanotube (SWCNT) and a multi-walled carbon nanotube (MWCNT).

The SWCNT and the MWCNT are not particularly limited as long as the SWCNT and the MWCNT can be used for an electrode for a power storage device, and for example, the diameter, length, and aspect ratio of the SWCNT or the MWCNT are not particularly limited.

In the present invention, the SWCNT and the MWCNT may be used singly or in combination.

The ethyl cellulose used as a dispersant in the present invention is a water-insoluble cellulose ether in which some and/or all of three hydroxyl groups of cellulose are substituted with ethyl groups.

The weight average molecular weight (Mw) of the ethyl cellulose is preferably 20,000 to 300,000 and more preferably 30,000 to 200,000 from the viewpoint of solubility in the solvent and dispersibility of the CNT.

As the ethyl cellulose, a commercially available product can be used. Examples of the commercially available product include ETHOCEL (registered trademark) series manufactured by The Dow Chemical Company and Aqualon™ ethylcellulose series manufactured by Ashland Inc.

In the CNT powder of the present invention, the weight ratio of the content of the CNT to the content of the dispersant (CNT : dispersant) may be adjusted within the range of 33 : 67 to 99 : 1, and is more preferably adjusted within the range of 40 : 60 to 80 : 20.

The CNT powder of the present invention can be prepared by kneading the CNT, the dispersant and a solvent to prepare a paste-like kneaded product, and then drying the kneaded product.

In addition, the CNT powder of the present invention has a structure in which the dispersant is attached to the surface of the CNT. By having such a structure, the CNT powder of the present invention has excellent dispersibility in an electrode material, and can widely adhere to the surface of an electrode material such as an electrode active material or a solid electrolyte so as to exhibit excellent electrical conductivity.

The presence of the structure can be confirmed, for example, by dispersing the CNT powder of the present invention in a solvent such as N-methyl-2-pyrrolidone (NMP) and examining the weight of the dispersant released. When the weight of the released dispersant is less than 10% of the weight of the dispersant contained in the CNT powder, it can be determined that the CNT powder has the above structure.

Commercial products and conventional products (dispersions) have the following disadvantages.

1. In general, it is known that a dispersion has poor stability and a short product life because a rheology change due to aggregation or precipitation of CNTs, a concentration change due to volatilization of a solvent, and the like easily occur as compared with the CNT powder of the present invention.
2. Since the product life is short, it is necessary to create a dispersion factory near a battery factory in order to reuse a solvent recovered and regenerated in the battery factory in the dispersion factory.
3. In many cases, the content of CNTs in commercial products is generally 6 wt% or less, and when the content of CNTs is low in this manner, there is a restriction in terms of formulation of the electrode mixture.
4. Since the CNT content is low, and the volume and weight (per CNT unit weight) are large, the cost of transportation and storage is high.
5. A dispersion design suitable for the battery system is required. For example, usable solvents are different between the liquid lithium ion battery and the sulfide all-solid-state battery. When the solvent is changed, there is a high possibility that the CNT dispersion conditions are also changed.

The CNT powder of the present invention has the following advantages.

1. A rheological change due to aggregation and precipitation of CNTs, a concentration change due to volatilization of a solvent, and the like do not occur, and stability is good.
2. Since the product life is long, and a solvent recovered and regenerated in a battery factory is not reused in a dispersion factory, it is unnecessary to create the dispersion factory near the battery factory.
3. Since the CNT content is high, it is considered that there is almost no restriction in terms of formulation when the electrode mixture is prepared.

4. Since the CNT content is high, and the volume and weight (per unit weight of CNT) are small, transportation and storage costs are low.

5. The CNT powder has excellent dispersibility even when used to prepare an electrode mixture having various compositions, and thus can be applied to various battery systems. For example, the same CNT powder can be used in the liquid lithium ion battery and the sulfide all-solid-state battery.

Examples of the solvent include an alcohol-based solvent, an amine-based solvent, an ether-based solvent, a glycol ester-based solvent, and a ketone-based solvent.

Examples of the alcohol-based solvent include methanol, ethanol, n-propyl alcohol, isopropyl alcohol (IPA), butyl alcohol, octyl alcohol, cyclohexanol, allyl alcohol, benzyl alcohol, cresol, furfuryl alcohol, propylene glycol monomethyl ether (PM), ethylene glycol monomethyl ether, ethylene glycol monoethyl ether, ethylene glycol tertiary butyl ether (ETB), ethylene glycol monobutyl ether, 3-methoxy-3-methyl-1-butanol, ethylene glycol monopropyl ether, ethylene glycol phenyl ether, diethylene glycol monobutyl ether, triethylene glycol monobutyl ether, and dipropylene glycol monomethyl ether.

Examples of the amine-based solvent include N,N-dimethylaminopropylamine and diethylenetriamine.

Examples of the ether-based solvent include methyl phenyl ether (anisole), tetrahydrofuran, dioxane, and ethylene glycol dimethyl ether.

Examples of the glycol ester-based solvent include propylene glycol monomethyl ether acetate (PMA), ethylene glycol monoethyl ether acetate, 3-methoxybutyl acetate, and ethylene glycol diacetate.

Examples of the ketone-based solvent include acetone, methyl ethyl ketone (MEK), cyclopentanone, and cyclohexanone.

The solvent may be used alone or in combination of two or more thereof.

The amount of the solvent to be blended in the CNT and the dispersant is not particularly limited as long as a paste-like kneaded product is obtained.

Examples of the mixer used for the kneading include a planetary mixer, a kneader, an extrusion type kneader, and a thin-film swirling system high-speed mixer.

The planetary mixer is a machine that mixes materials by material retention and shear stress caused by centrifugal force generated by rotating and revolving (planetary motion), and is also called a rotating and revolving mixer.

The planetary mixer only has to be a commercially available manufacturing apparatus, and is not particularly limited.

The conditions for preparing the kneaded product are not particularly limited. It is preferable to perform kneading at a temperature lower than the boiling point of the solvent.

The method for drying the kneaded product obtained as described above is not particularly limited, and only has to be performed by a device capable of adjusting the temperature to a temperature equal to or higher than the temperature at which the solvent volatilizes, a device capable of removing the solvent by decompression, a freeze-drying device, or the like. For example, from the viewpoint of efficient drying, it is preferable to volatilize the solvent while increasing the treatment temperature in the planetary mixer and kneading the kneaded product.

The degree of volatilization of the solvent is not particularly limited as long as the kneaded product is in a powder form. In addition, when the kneaded product is insufficiently dried or an odor of the solvent is felt when taken out from the device for drying the kneaded product, additional drying may be performed. The CNT powder of the present invention has a property of hardly aggregating even in such a drying step.

<Composite for electrode of power storage device>

The composite for an electrode of a power storage device of the present invention (hereinafter, also referred to as a composite for an electrode) includes the CNT powder for an electrode and an inorganic compound, and the inorganic compound is an electrode active material and/or a solid electrolyte.

The composite for an electrode can be used as a material for preparing an electrode for a power storage device.

For example, an electrode mixture paste for a power storage device can be produced by mixing and kneading the composite for an electrode containing an electrode active material with carbon black, a binder, and a solvent.

Examples of the inorganic compound include an electrode active material and a solid electrolyte.

The electrode active material includes an active material used for either a positive electrode or a negative electrode.

Examples of the positive electrode active material include layered oxides (such as $LiCoO_2$, $LiNiO_2$, and $LiNi_{1/3}Mn_{1/3}Co_{1/3}$), spinel type oxides (such as $LiMnO_2$ and $LiMn_{1.6}Ni_{0.4}O_4$), olivine type oxides (such as $LiFePO_4$, $Fe_2(SO_4)_3$, and $LiCoPO_4$), and reverse spinel type oxides (such as $LiCoVO_4$ and $LiNiVO_4$) used for a positive electrode of a lithium ion battery.

Examples of the negative electrode active material include carbon-based (such as graphite, non-graphitizable carbon, amorphous carbon, a polymer compound fired body (for example, a body obtained by firing and carbonizing a phenol resin, and a furan resin), cokes (for example, pitch coke, needle coke, and petroleum coke), and carbon fibers), oxide-based ($Li_2TiO_3$ and $TiNb_xO$), and silicon-based (Si, SiO) used for a negative electrode of a lithium ion battery.

The positive electrode active material or the negative electrode active material can be used singly or in combination of two or more kinds thereof.

The solid electrolyte is a solid capable of conducting only ions, and only has to be any solid electrolyte that can be used for a power storage device according to the type of the power storage device to be described later.

Examples of the solid electrolyte having lithium ion conductivity include the following.

- Oxide-based solid electrolytes: crystalline (such as $Li_{1.3}Al_{0.3}Ti_{1.7}(PO_4)_3$, $La_{0.51}Li_{0.34}TiO_{2.94}$, and $Li_7La_3Zr_2O_{12}$), amorphous (such as $Li_{2.9}PO_{3.3}N_{0.46}$)
- Sulfide-based solid electrolytes: crystalline (such as $Li_{10}GeP_2S_{12}$, $Li_{3.25}Ge_{0.25}P_{0.75}S_4$, and $Li_6PS_5Cl$), glass ceramic (such as $Li_7P_3S_{11}$), amorphous (such as $70Li_2S\text{-}30P_2S_5$)
- Others (such as $Li_2B_{12}H_{12}$, $Li_3OCl_{0.5}Br_{0.5}$)

The content of the CNT-containing powder of the present invention in the composite for an electrode is not particularly limited, and may be appropriately adjusted according to the type of the inorganic compound, the type of the CNT, the type of the electrode to be applied, and the type of the power storage device to be applied. For example, in the case of a composite used for a negative electrode of a secondary battery, the content of the CNT-containing powder only has to be 0.01 to 10 wt%.

The composite for an electrode can be produced by mixing the CNT-containing powder for an electrode with the inorganic compound.

The mixing is not particularly limited, and may be performed by any of a wet method and a dry method. Examples of the mixer used for the mixing include a planetary mixer, a kneader, an extrusion type kneader, and a thin-film swirling system high-speed mixer.

For example, a composite for an electrode containing an electrode active material as the inorganic compound can be produced by the following steps.

Homogenization step: A mixture is prepared by mixing an electrode active material, a CNT powder for an electrode, and a solvent.

Defibration step: The mixture is kneaded using the mixer.

Finishing step: The solvent is removed by drying or the like as necessary.

The solvent is not particularly limited, and examples thereof include alcohol-based solvents such as methanol, ethanol, normal propyl alcohol, IPA, butyl alcohol, octyl alcohol, cyclohexanol, allyl alcohol, benzyl alcohol, cresol, and furfuryl alcohol,

alcohol ether-based solvents such as PM, ethylene glycol monomethyl ether, ethylene glycol monoethyl ether, ETB, ethylene glycol monobutyl ether, 3-methoxy-3-methyl-1-butanol, ethylene glycol monopropyl ether, ethylene glycol phenyl ether, diethylene glycol monobutyl ether, triethylene glycol monobutyl ether, and dipropylene glycol monomethyl ether,
amine-based solvents such as N,N-dimethylaminopropylamine and diethylenetriamine,
ether-based solvents such as methyl phenyl ether, tetrahydrofuran, dioxane, and ethylene glycol dimethyl ether,
glycol ester-based solvents such as PMA, ethylene glycol monoethyl ether acetate, 3-methoxybutyl acetate, and ethylene glycol diacetate,
ketone-based solvents such as acetone, MEK, cyclopentanone, and cyclohexanone,
aromatic hydrocarbon-based solvents such as benzene, toluene, xylene, cymene, and mesitylene,
aprotic polar solvents such as NMP, dimethyl sulfoxide, and dimethylformamide,
aliphatic hydrocarbon-based solvents such as pentane, normal hexane, octane, cyclopentane, and cyclohexane,
an aldehyde-based solvent such as furfural,
ester solvents such as butyl acetate, ethyl acetate, methyl acetate, butyl propionate, ethylene glycol monoethyl ether acetate, 3-methoxybutyl acetate, ethylene glycol diacetate, dimethyl carbonate, diethyl carbonate, ethylene carbonate, propylene carbonate, and butyl butyrate, and
polyol-based solvents such as glycerol, ethylene glycol, and diethylene glycol.

Among them, when NMP is used, good defibration of the CNT can be exhibited.

In the defibration step, by adjusting the concentration of an electrode active material to the concentration (C) (unit: wt%) of an electrode active material calculated according to the following formula (1) from the tap density ($D_{Tap}$) (unit: $g/cm^3$) of the electrode active material while adding a solvent as necessary, the defibration of the CNT when kneaded with the solvent can be improved, and the uniform dispersibility of the CNT can be improved.

$$C = 7.0 \times D_{Tap} + \alpha \cdots \text{ formula (1)}$$

(in the formula, $60 \leq \alpha \leq 70$.)

The tap density of the electrode active material can be measured by the formulation according to JIS K 5101-12-2. For a commercially available electrode active material, a numerical value described in the catalog may be used.

<Electrode mixture paste for power storage device>

The electrode mixture paste for a power storage device of the present invention (hereinafter, also referred to as the electrode mixture paste of the present invention.) includes the CNT powder for an electrode, an electrode active material, a binder, and a solvent.

The content of the CNT powder for an electrode in the electrode mixture paste of the present invention only has to be appropriately adjusted according to the type of the power storage device to be applied, from the viewpoint of the improvement of electrical conductivity and the capacity of the power storage device.

The electrode active material is not particularly limited as long as it can be used for the composite for an electrode.

The content of the electrode active material in the electrode mixture paste of the present invention only has to be appropriately adjusted according to the type of the power storage device to be applied, from the viewpoint of the improvement of electrical conductivity and the capacity of the power storage device.

The binder may be any binder that can be used for an electrode for a power storage device, and examples thereof include polyvinylidene fluoride (PVDF), polyvinyl alcohol, polyvinyl acetal, an acrylic resin, polyvinyl acetate, polyvinyl chloride, polystyrene, polyvinyl ether, polyvinyl pyrrolidone (PVP), styrene butadiene rubber (SBR), and carboxymethyl cellulose. These may be modified with various functional groups, and as the functional group, a polar functional group such as an acidic group or a basic group can be suitably used. The binder may be used singly or in combination of two or more kinds thereof.

The weight average molecular weight of the binder is not particularly limited, and for example, a binder having a weight average molecular weight within the range of 110,000 to 5 million can be suitably used.

The content of the binder in the electrode mixture paste of the present invention only has to be appropriately adjusted according to the type of the power storage device to be applied, from the viewpoint of the improvement of electrical conductivity and the capacity of the power storage device.

The solvent is not particularly limited, and examples thereof include alcohol-based solvents such as methanol, ethanol, normal propyl alcohol, IPA, butyl alcohol, octyl alcohol, cyclohexanol, allyl alcohol, benzyl alcohol, cresol, and furfuryl alcohol,

alcohol ether-based solvents such as PM, ethylene glycol monomethyl ether, ethylene glycol monoethyl ether, ETB, ethylene glycol monobutyl ether, 3-methoxy-3-methyl-1-butanol, ethylene glycol monopropyl ether, ethylene glycol phenyl ether, diethylene glycol monobutyl ether, triethylene glycol monobutyl ether, and dipropylene glycol monomethyl ether,
amine-based solvents such as N,N-dimethylaminopropylamine and diethylenetriamine,
ether-based solvents such as methyl phenyl ether, tetrahydrofuran, dioxane, and ethylene glycol dimethyl ether,
glycol ester-based solvents such as PMA, ethylene glycol monoethyl ether acetate, 3-methoxybutyl acetate, and ethylene glycol diacetate,
ketone-based solvents such as acetone, MEK, cyclopentanone, and cyclohexanone,
aromatic hydrocarbon-based solvents such as benzene, toluene, xylene, cymene, and mesitylene,
aprotic polar solvents such as NMP, dimethyl sulfoxide, and dimethylformamide,
aliphatic hydrocarbon-based solvents such as pentane, normal hexane, octane, cyclopentane, and cyclohexane,
an aldehyde-based solvent such as furfural,
ester solvents such as butyl acetate, ethyl acetate, methyl acetate, butyl propionate, ethylene glycol monoethyl ether acetate, 3-methoxybutyl acetate, ethylene glycol diacetate, dimethyl carbonate, diethyl carbonate, ethylene carbonate, propylene carbonate, and butyl butyrate, and
polyol-based solvents such as glycerol, ethylene glycol, and diethylene glycol.

Among them, when NMP is used, good defibration of the CNT can be exhibited.

The electrode mixture paste of the present invention can be obtained by kneading the CNT powder for an electrode, an electrode active material, a binder, and a solvent. The kneading method is not particularly limited, and examples of the mixer used for kneading include a planetary mixer, a kneader, an extrusion type kneader, and a thin-film swirling system high-speed mixer.

In the mixing order, the respective components may be mixed at the same time, or the CNT powder for an electrode, an electrode active material, and a binder may be mixed in order with a solvent. This order is not particularly limited, and for example, a mixture (composite for an electrode) of the CNT powder for an electrode and an electrode active material may be gradually added. Alternatively, a binder may be mixed and dissolved in a solvent in advance.

The ratio of the electrode component in the electrode mixture paste, that is, the ratio of the CNT powder for an electrode, the electrode active material, and the binder in the electrode mixture paste only has to be appropriately adjusted according to the type of the power storage device to be applied, from the viewpoint of the thickness of the obtained electrode and coatability.

The electrode mixture paste of the present invention can be prepared by, for example, the following steps.

Homogenization step: A mixture is prepared by mixing an electrode active material, a CNT powder for an electrode, and a solvent.

Defibration step: The mixture is kneaded using the mixer.

Finishing step: A binder and, if necessary, a solvent are added.

In the defibration step, by adjusting the concentration of an electrode active material to the concentration (C) (unit: wt%) of an electrode active material calculated according to the formula (1) from the tap density ($D_{Tap}$) (unit: g/cm$^3$) of the electrode active material while adding a solvent as necessary, the defibration of the CNT when kneaded with the solvent can be improved, and the uniform dispersibility of the CNT can be improved.

The tap density of the electrode active material can be measured by the formulation according to JIS K 5101-12-2. For a commercially available electrode active material, a numerical value described in the catalog may be used.

<Electrode for power storage device>

The electrode for a power storage device (hereinafter, also referred to as the electrode of the present invention) of the present invention includes an electrode mixture layer formed using the electrode mixture paste of the present invention, and is specifically obtained by applying the electrode mixture paste of the present invention to a current collector and drying the obtained product. By the drying, the solvent in the electrode mixture paste of the present invention is removed, an electrode mixture layer is formed on the current collector, and an electrode is obtained.

In the electrode of the present invention, examples of the current collector include Al, Ni, Cu, and stainless steel.

Examples of the shape of the current collector include a foil shape, a flat plate shape, a mesh shape, a net shape, a lath shape, a punching metal shape, an embossed shape, and a combination thereof (for example, a mesh-like flat plate). Further, irregularities may be formed on the surface of the current collector by etching treatment.

The method for applying the electrode mixture paste of the present invention to the current collector is not particularly limited.

Examples of the method include a slit die coating method, a screen coating method, a curtain coating method, a knife coating method, a gravure coating method, and an electrostatic spraying method. The drying performed after the application may be performed by heat treatment, air blow drying, vacuum drying, or the like. When drying is performed by heat treatment, the temperature is usually about 50 to 150°C. In addition, pressing may be performed after drying. Examples of the pressing method include die pressing and roll pressing. The electrode of the present invention can be produced by the method described above.

The thickness of the electrode is usually about 5 to 500 μm.

<Power storage device>

The power storage device of the present invention includes an electrode mixture layer formed using the electrode mixture paste of the present invention. A specific example thereof is a liquid type or solid type power storage device including the electrode of the present invention in which an electrode mixture layer formed of the electrode mixture paste of the present invention is formed.

Examples thereof include various power storage devices such as liquid type power storage devices (such as lithium ion battery, sodium ion battery, multivalent metal ion battery, lithium sulfur battery, sulfide battery, conversion battery, redox flow battery, fluoride battery, chloride battery, and zinc negative electrode battery), various all-solid-state batteries (such as sulfide-based, oxide-based, nitride-based, and polymer-based), various air batteries (such as lithium air battery, zinc air battery, and sodium air battery), various capacitors (such as lithium ion capacitor and electric double layer capacitor), and various fuel cells (such as solid polymer form and alkali form).

The power storage device of the present invention can be produced by a known method for producing a power storage device except that the electrode of the present invention is used. The structure of the electrode of the present invention included in the power storage device only has to be an appropriate structure according to the type of the power storage device as described above.

EXAMPLES

The materials used in Examples are as follows.

<CNT>

- "LUCAN BT 1003M" (MWCNT manufactured by LG Chem Ltd.)

<Dispersant>

- Ethyl cellulose "ETHOCEL (registered trademark) STD-4 Industrial" (weight average molecular weight (Mw) about 44,000)
- Ethyl cellulose "ETHOCEL (registered trademark) STD-7 Industrial" (weight average molecular weight (Mw) about 55,000)
- Ethyl cellulose "ETHOCEL (registered trademark) STD-10 Industrial" (weight average molecular weight (Mw) about 77,000)
- Ethyl cellulose "ETHOCEL (registered trademark) STD-20 Industrial" (weight average molecular weight (Mw) about 105,000)
- Ethyl cellulose "ETHOCEL (registered trademark) STD-45 Industrial" (weight average molecular weight (Mw) about 135,000)
- Ethyl cellulose "ETHOCEL (registered trademark) STD-100 Industrial" (weight average molecular weight (Mw) about 180,000)
- Ethyl cellulose "ETHOCEL (registered trademark) STD-200 Industrial" (weight average molecular weight (Mw) about 188,000)
- Ethyl cellulose "ETHOCEL (registered trademark) STD-300 Industrial"

The ETHOCEL (registered trademark) series described above is manufactured by The Dow Chemical Company.

- Ethyl cellulose "Aqualon™ ethylcellulose EC-N4"
- Ethyl cellulose "Aqualon™ ethylcellulose EC-N50"
- Ethyl cellulose "Aqualon™ ethylcellulose EC-N100"
- Ethyl cellulose "Aqualon™ ethylcellulose EC-N200"
- Ethyl cellulose "Aqualon™ ethylcellulose EC-N300"

The Aqualon™ ethylcellulose series described above is manufactured by Ashland Inc.

Each of the cellulose ethers of ETHOCEL (registered trademark) series and Aqualon™ ethylcellulose series used in Examples 1 to 13 described later is a water-insoluble cellulose ether in which some and/or all of three hydroxyl groups of cellulose are substituted with ethyl groups.

- Methylcellulose "METOLOSE (registered trademark) SM-4000" (water-soluble cellulose ether manufactured by Shin-Etsu Chemical Co., Ltd.)
- Hydroxypropyl methylcellulose "METOLOSE (registered trademark) 60SH-4000" (water-soluble cellulose ether manufactured by Shin-Etsu Chemical Co., Ltd.)
- Hydroxypropyl methylcellulose "METOLOSE (registered trademark) 90SH-4000" (water-soluble cellulose ether manufactured by Shin-Etsu Chemical Co., Ltd.)
- Cellulose acetate "L-50" (cellulose ester manufactured by Daicel Corporation)

<Binder>

- PVDF (polyvinylidene fluoride)

<Electrode active material>

- NCM523 (LiNi$_{0.5}$Co$_{0.2}$Mn$_{0.3}$O$_2$) tap density: 2.13 g/cm$^3$

<Solvent>

- PM (propylene glycol monomethyl ether)
- PMA (propylene glycol monomethyl ether acetate)
- NMP (N-methyl-2-pyrrolidone)

(Examples 1 to 13: Production of CNT-containing powders 1 to 13)

The weight ratio of CNT to each of the various dispersants (CNT : dispersant) shown in Table 1 was adjusted to 80 : 20, and the mixture was added to the various solvents shown in Table 1 so that the solid content was 50 to 10 wt%, and kneaded (temperature 30°C) using a planetary mixer to prepare paste-like kneaded products. Then, the kneaded products were dried to obtain CNT-containing powders 1 to 13.

(Comparative Examples 1 to 5: Production of CNT-containing powders 14 to 18)

CNT-containing powders 14 to 18 were obtained in the same manner as in Example 1 except that the dispersant and the solvent shown in Table 1 were used.

(Comparative Example 6: Production of CNT dispersion)

Using the CNT, the dispersant and the solvent shown in Table 1, a CNT dispersion (CNT concentration: 0.1 wt%, CNT : dispersant = 100 : 300) was obtained according to the conditions of Example 1 of WO 2017/188175 A.

[Table 1]

|  |  | Dispersant | Solvent |
|---|---|---|---|
| Example 1 | CNT-containing powder 1 | STD-4 | PM |
| Example 2 | CNT-containing powder 2 | STD-7 | PM |
| Example 3 | CNT-containing powder 3 | STD-10 | PM |
| Example 4 | CNT-containing powder 4 | STD-20 | PM |
| Example 5 | CNT-containing powder 5 | STD-45 | PM |
| Example 6 | CNT-containing powder 6 | STD-100 | PM |
| Example 7 | CNT-containing powder 7 | STD-200 | PM |
| Example 8 | CNT-containing powder 8 | STD-300 | PM |
| Example 9 | CNT-containing powder 9 | EC-N4 | PM |
| Example 10 | CNT-containing powder 10 | EC-N50 | PM |
| Example 11 | CNT-containing powder 11 | EC-N100 | PM |
| Example 12 | CNT-containing powder 12 | EC-N200 | PM |
| Example 13 | CNT-containing powder 13 | EC-N300 | PM |
| Comparative Example 1 | CNT-containing powder 14 | SM-4000 | PM |
| Comparative Example 2 | CNT-containing powder 15 | 60SH-4000 | PM |
| Comparative Example 3 | CNT-containing powder 16 | 65SH-4000 | PM |
| Comparative Example 4 | CNT-containing powder 17 | 90SH-4000 | PM |

(continued)

|  | | Dispersant | Solvent |
|---|---|---|---|
| **Comparative Example 5** | **CNT-containing powder 18** | **L-50** | **PMA** |
| **Comparative Example 6** | **CNT dispersion** | **STD-4** | **NMP** |

(Examples 14 to 26: Production of electrode mixture pastes 1 to 13)

The CNT-containing powders 1 to 13 obtained in Examples 1 to 13 were kneaded together with NCM523 and PVDF in NMP using a planetary mixer to prepare an electrode mixture pastes 1 to 13 (solid weight composition NCM523 : CNT : dispersant : PVDF = 97.50 : 0.50 : 0.125 : 1.875). The dispersant in the weight composition is derived from a CNT-containing powder.
Table 2 shows the types of the components used and the solid content concentration at the time of kneading.

(Comparative Examples 7 to 11: Production of electrode mixture pastes 14 to 18)

Electrode mixture pastes 14 to 18 were prepared in the same manner as in Example 14 except that the CNT-containing powders 14 to 18 obtained in Comparative Examples 1 to 5 were used.
Table 2 shows the types of the components used and the solid content concentration at the time of kneading.

(Comparative Example 12: Production of electrode mixture paste 19)

The CNT dispersion obtained in Comparative Example 6 was mixed with NCM523 and PVDF, then concentrated to a solid content concentration of 57.5 wt%, and then kneaded using a planetary mixer to prepare an electrode mixture paste 19 (solid weight composition NCM523 : CNT : dispersant : PVDF = 97.50 : 0.50 : 1.50 : 0.50). The dispersant in the weight composition is derived from the CNT dispersion.

[Table 2]

| | CNT component | Active material | Solvent | Binder | Kneading concentration [wt%] | Electrode mixture paste | Electrode drying conditions (vacuum) Temperature [°C] | Electrode drying conditions (vacuum) Time [h] | Surface resistivity Ave. [Ω/□] | Film thickness Ave. [cm] | Volume resistivity [Ω·cm] |
|---|---|---|---|---|---|---|---|---|---|---|---|
| Example 14 | CNT-containing powder 1 | NCM523 | NMP | PVDF | 83.0% | Electrode mixture paste 1 | 100 | 18 | 6.78E+03 | 3.71E-03 | 2.52E+01 |
| Example 15 | CNT-containing powder 2 | NCM523 | NMP | PVDF | 83.0% | Electrode mixture paste 2 | 100 | 18 | 3.89E+03 | 1.32E-02 | 5.14E+01 |
| Example 16 | CNT-containing powder 3 | NCM523 | NMP | PVDF | 83.0% | Electrode mixture paste 3 | 100 | 18 | 2.99E+03 | 1.34E-02 | 4.02E+01 |
| Example 17 | CNT-containing powder 4 | NCM523 | NMP | PVDF | 83.0% | Electrode mixture paste 4 | 100 | 18 | 8.37E+03 | 4.75E-03 | 3.98E+01 |
| Example 18 | CNT-containing powder 5 | NCM523 | NMP | PVDF | 83.0% | Electrode mixture paste 5 | 100 | 18 | 6.89E+03 | 6.16E-03 | 4.24E+01 |
| Example 19 | CNT-containing powder 6 | NCM523 | NMP | PVDF | 83.0% | Electrode mixture paste 6 | 100 | 18 | 3.94E+03 | 5.50E-03 | 2.17E+01 |
| Example 20 | CNT-containing powder 7 | NCM523 | NMP | PVDF | 83.0% | Electrode mixture paste 7 | 100 | 18 | 5.06E+03 | 4.09E-03 | 2.07E+01 |
| Example 21 | CNT-containing powder 8 | NCM523 | NMP | PVDF | 83.0% | Electrode mixture paste 8 | 100 | 18 | 7.10E+03 | 4.34E-03 | 3.08E+01 |
| Example 22 | CNT-containing powder 9 | NCM523 | NMP | PVDF | 83.0% | Electrode mixture paste 9 | 100 | 18 | 6.67E+03 | 4.85E-03 | 3.23E+01 |

(continued)

| | Electrode mixture paste | | | | | Electrode | | | | | |
|---|---|---|---|---|---|---|---|---|---|---|---|
| | CNT component | Active material | Solvent | Binder | Kneading concentration | Electrode mixture paste | Electrode drying conditions (vacuum) | | Surface resistivity | Film thickness | Volume resistivity |
| | | | | | [wt%] | | Temperature [°C] | Time [h] | Ave. [Ω/□] | Ave. [cm] | [Ω·cm] |
| Example 23 | CNT-containing powder 10 | NCM523 | NMP | PVDF | 83.0% | Electrode mixture paste 10 | 100 | 18 | 6.44E+03 | 4.34E-03 | 2.79E+01 |
| Example 24 | CNT-containing powder 11 | NCM523 | NMP | PVDF | 83.0% | Electrode mixture paste 11 | 100 | 18 | 5.19E+03 | 4.60E-03 | 2.39E+01 |
| Example 25 | CNT-containing powder 12 | NCM523 | NMP | PVDF | 83.0% | Electrode mixture paste 12 | 100 | 18 | 6.98E+03 | 4.39E-03 | 3.06E+01 |
| Example 26 | CNT-containing powder 13 | NCM523 | NMP | PVDF | 83.0% | Electrode mixture paste 13 | 100 | 18 | 4.96E+03 | 4.39E-03 | 2.18E+01 |
| Comparative Example 7 | CNT-containing powder 14 | NCM523 | NMP | PVDF | 83.0% | Electrode mixture paste 14 | 100 | 18 | 4.88E+04 | 5.25E-03 | 2.56E+02 |
| Comparative Example 8 | CNT-containing powder 15 | NCM523 | NMP | PVDF | 83.0% | Electrode mixture paste 15 | 100 | 18 | 2.47E+04 | 4.47E-03 | 1.10E+02 |
| Comparative Example 9 | CNT-containing powder 16 | NCM523 | NMP | PVDF | 83.0% | Electrode mixture paste 16 | 100 | 18 | 4.65E+04 | 4.67E-03 | 2.17E+02 |
| Comparative Example 10 | CNT-containing powder 17 | NCM523 | NMP | PVDF | 83.0% | Electrode mixture paste 17 | 100 | 18 | 6.75E+04 | 4.71E-03 | 3.18E+02 |
| Comparative Example 11 | CNT-containing powder 18 | NCM523 | NMP | PVDF | 83.0% | Electrode mixture paste 18 | 100 | 18 | 6.75E+04 | 4.71E-03 | 8.51E+04 |

(continued)

| | Electrode mixture paste | | | | | Electrode | | | | |
|---|---|---|---|---|---|---|---|---|---|---|
| | CNT component | Active material | Solvent | Binder | Kneading concentration [wt%] | Electrode mixture paste | Electrode drying conditions (vacuum) Temperature [°C] | Time [h] | Surface resistivity Ave. [Ω/□] | Film thickness Ave. [cm] | Volume resistivity [Ω·cm] |
| Comparative Example 12 | CNT dispersion | NCM523 | NMP | PVDF | 57.5% | Electrode mixture paste 19 | 100 | 18 | 1.01E+05 | 7.12E-03 | 7.17E+02 |

<Test Example 1: Surface resistivity and film thickness>

The surface resistivity and the film thickness of the electrodes prepared using the obtained electrode mixture pastes 1 to 19 were evaluated as follows.

• Surface resistivity of electrode

The surface resistivity of electrode mixture layers formed by applying the electrode mixture pastes 1 to 19 to a PET sheet material so as to have a thickness of 0.05 mm (hereinafter, referred to as electrodes) was measured using a low resistivity meter "Loresta (registered trademark)-GX MCP-T700" (manufactured by Nittoseiko Analytech Co., Ltd.). The drying conditions (temperature, time) at the time of preparing the electrode are as shown in Table 2.

• Film thickness of electrode

The film thickness of the electrode mixture layer was measured using a high-accuracy digimatic micrometer "MDH-25MB" (manufactured by Mitutoyo Corporation).
Five electrodes for evaluation were prepared from one electrode mixture paste, and the volume resistivity was calculated from the average value of the surface resistivity and the average value of the film thickness. The results are shown in Table 2.

(Evaluation: Evaluation of volume resistivity)

Pass if the volume resistivity is 100 $\Omega \cdot$ cm (1.00E+02 $\Omega \cdot$ cm) or less
Failure if the volume resistivity exceeds 100 $\Omega \cdot$ cm (1.00E+02 $\Omega \cdot$ cm)

From the results shown in Table 2, the electrodes prepared using the electrode mixture pastes 1 to 13 obtained in Examples 14 to 26 were all excellent in electrical conductivity with low volume resistivity.
On the other hand, all the electrodes prepared using the electrode mixture pastes 14 to 19 obtained in Comparative Examples 7 to 12 had high volume resistivity.

<Test Example 2: Observation of surface state>

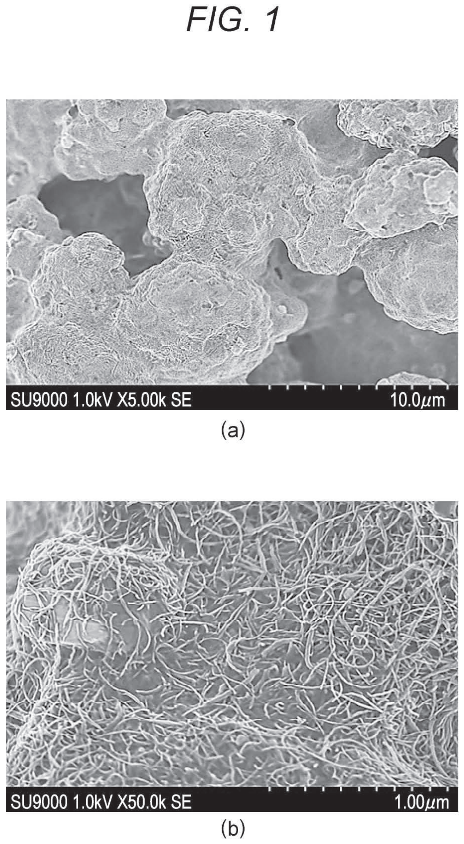

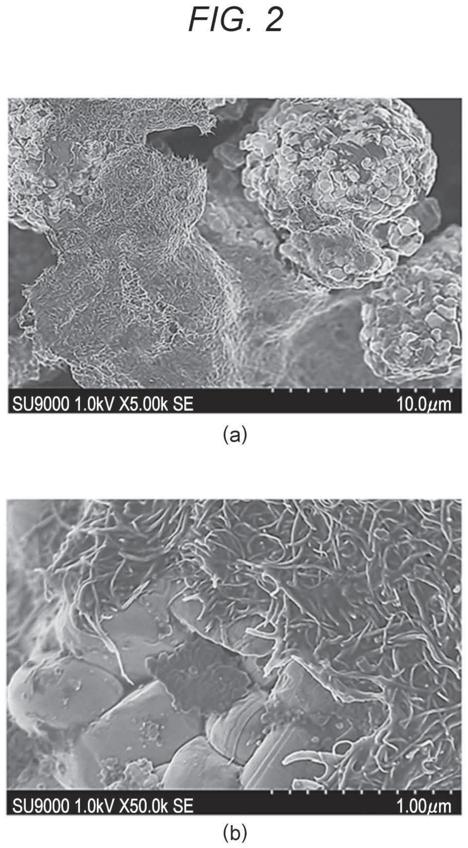

The surface state of each electrode was observed using a scanning electron microscope.
(a) An electron microscope image ($\times$ 5,000 times) of an electrode surface prepared using the electrode mixture paste 1 obtained in Example 14 and (b) an electron microscope image ($\times$ 50,000 times) obtained by enlarging (a) are respectively shown in Figs. 1(a) and 1(b).
In addition, (a) an electron microscope image ($\times$ 5,000 times) of an electrode surface prepared using the electrode mixture paste 19 obtained in Comparative Example 12 and (b) an electron microscope image ($\times$ 50,000 times) obtained by enlarging (a) are respectively shown in Figs. 2(a) and 2(b).
From Fig. 1(a), in the electrode prepared using the electrode mixture paste 1 obtained in Example 14, aggregation of CNTs was not observed on the surface of the active material, and when the electrode surface was further enlarged as shown in Fig. 1(b), it was confirmed that the surface of the active material was uniformly covered with CNTs.
On the other hand, from Fig. 2(a), in the electrode prepared using the electrode mixture paste 19 obtained in Comparative Example 12, a plurality of agglomerated lumps of CNTs was observed on the surface, and when the electrode surface was further enlarged as shown in Fig. 2(b), it was confirmed that the surface of the active material was not covered with CNTs, there was a largely exposed portion, and CNTs were unevenly distributed.
From the above results, it is found that since the CNT-containing powder for an electrode of the present invention has excellent dispersibility in an electrode for a power storage device, an electrode for a power storage device obtained using a composite for an electrode or an electrode mixture paste containing the CNT-containing powder for an electrode of the present invention has low volume resistivity, and is excellent in electrical conductivity.

**Claims**

**1.** A CNT-containing powder for an electrode of a power storage device, comprising:

a carbon nanotube (CNT), and
ethyl cellulose as a dispersant.

2. The CNT-containing powder for an electrode of a power storage device according to claim 1, wherein the dispersant is attached to a surface of the CNT.

3. The CNT-containing powder for an electrode of a power storage device according to claim 1, wherein the weight ratio of the content of the CNT to the content of the dispersant (CNT : dispersant) is 33 : 67 to 99 : 1.

4. A composite for an electrode of a power storage device comprising the CNT-containing powder for an electrode according to any one of claims 1 to 3 and an inorganic compound, wherein the inorganic compound is an electrode active material and/or a solid electrolyte.

5. An electrode mixture paste for a power storage device, comprising the CNT-containing powder for an electrode of a power storage device according to any one of claims 1 to 3, an electrode active material, a binder, and a solvent.

6. An electrode for a power storage device comprising an electrode mixture layer formed using the electrode mixture paste for a power storage device according to claim 5.

7. A power storage device comprising an electrode mixture layer formed using the electrode mixture paste for a power storage device according to claim 5.

8. A method for producing a CNT-containing powder for an electrode of a power storage device according to any one of claims 1 to 3, the method comprising:
kneading a CNT, a dispersant, and a solvent to prepare a paste-like kneaded product, and then drying the kneaded product to obtain a CNT-containing powder.

9. The method according to claim 8, wherein the solvent is one or more selected from the group consisting of an alcohol-based solvent, an amine-based solvent, an ether-based solvent, a glycol ester-based solvent, and a ketone-based solvent.

# FIG. 1

SU9000 1.0kV X5.00k SE     10.0μm

(a)

SU9000 1.0kV X50.0k SE     1.00μm

(b)

# FIG. 2

(a)

(b)

## INTERNATIONAL SEARCH REPORT

| International application No. |
|---|
| **PCT/JP2024/024157** |

**A. CLASSIFICATION OF SUBJECT MATTER**

*H01M 4/62*(2006.01)i; *C01B 32/168*(2017.01)i; *H01G 11/36*(2013.01)i; *H01M 4/13*(2010.01)i; *H01M 4/139*(2010.01)i
FI: H01M4/62 Z; H01M4/139; H01M4/13; C01B32/168; H01G11/36

According to International Patent Classification (IPC) or to both national classification and IPC

**B. FIELDS SEARCHED**

Minimum documentation searched (classification system followed by classification symbols)

H01M4/00-4/62; H01G11/00-11/86; C01B32/00-32/991

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JST7580 (JDreamIII)

**C. DOCUMENTS CONSIDERED TO BE RELEVANT**

| Category* | Citation of document, with indication, where appropriate, of the relevant passages | Relevant to claim No. |
|---|---|---|
| A | JP 2006-240901 A (BUSSAN NANOTECH RES INST INC.) 14 September 2006 (2006-09-14)<br>paragraphs [0051], [0059]-[0060], [0062] | 1-9 |
| A | JP 2013-77560 A (ZEON CORPORATION) 25 April 2013 (2013-04-25)<br>paragraphs [0009]-[0017], [0028]-[0029] | 1-9 |
| A | JP 2021-528804 A (DOW GLOBAL TECHNOLOGIES LLC.) 21 October 2021 (2021-10-21)<br>claims 1, 10, paragraphs [0030]-[0032] | 1-9 |
| A | CN 114212776 A (AQUILARIA SINENSIS RUTAI NEW MATERIAL TECH CO., LTD.) 22 March 2022 (2022-03-22)<br>claim 1, paragraphs [0001], [0022]-[0042] | 1-9 |

☐ Further documents are listed in the continuation of Box C.   ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **09 September 2024** | **24 September 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

| International application No. |
| --- |
| **PCT/JP2024/024157** |

| Patent document cited in search report | | | Publication date (day/month/year) | Patent family member(s) | | | Publication date (day/month/year) |
| --- | --- | --- | --- | --- | --- | --- | --- |
| JP | 2006-240901 | A | 14 September 2006 | WO | 2006/093147 | A1 | |
| JP | 2013-77560 | A | 25 April 2013 | US | 2014/0342225 | A1 | |
| | | | | paragraphs [0040]-[0046], [0078]-[0079], [0083], [0085]-[0087] | | | |
| | | | | WO | 2013/039131 | A1 | |
| | | | | EP | 2757620 | A1 | |
| | | | | KR | 10-2014-0063789 | A | |
| | | | | CN | 103907226 | A | |
| JP | 2021-528804 | A | 21 October 2021 | US | 2021/0242447 | A1 | |
| | | | | claims 1, 10, paragraphs [0032]-[0034] | | | |
| | | | | WO | 2019/205079 | A1 | |
| | | | | CN | 112368859 | A | |
| | | | | CA | 3097215 | A1 | |
| CN | 114212776 | A | 22 March 2022 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017188175 A

- JP 2008274502 A